# FASCICULE DE BREVET EUROPEEN

(11) **EP 2 868 521 B1**
(45) Date de publication et mention de la délivrance du brevet: **19.07.2017**
(21) Numéro de dépôt: 14191229.5
(22) Date de dépôt: 31.10.2014
(51) Int. Cl.: B60N 2/58, B60R 21/207, B60R 7/08, B60N 2/70

(54) **Système de rangement d'objets pour véhicule automobile**
System zum Aufbewahren von Gegenständen für Kraftfahrzeug
Object storage system for a motor vehicle

(30) Priorité: 31.10.2013 FR 1360748
(43) Date de publication de la demande: 06.05.2015
(73) Titulaire: CENTRE D'ETUDE ET DE RECHERCHE POUR L'AUTOMOBILE (CERA), 51100 Reims (FR)
(72) Inventeur: Debled, Emmanuel, 51500 Taissy (FR); Airault, Jean-Yves, 56430 Concoret (FR); Crochet, Laurent, 51170 Fismes (FR); Ondars, Arnaud, 51110 Bazancourt (FR); Patte, Damien, 51490 Epoye (FR)
(74) Mandataire: Sayettat, Julien Christian

(56) Documents cités:
- DE-A1- 10 213 313
- DE-U1- 8 813 791
- DE-U1- 29 921 584
- DE-U1-202004 000 781
- FR-A2- 2 228 640
- US-A- 5 415 457

## Description

L'invention concerne un système de rangement d'objets pour véhicule automobile.

Il est connu de réaliser un système de rangement d'objets pour véhicule automobile, ledit système comprenant une paroi de fixation et un dispositif de rangement, ledit dispositif comprenant :
- un cadre ouvert en forme générale de U, ledit cadre étant associé contre une face d'endroit de ladite paroi par une pluralité d'organes d'ancrage, de manière à plaquer ledit cadre contre ladite paroi,
- un filet monté en tension sur ledit cadre, le bord supérieur dudit filet étant pourvu d'un lien tendu entre les parties extrêmes dudit cadre, de manière à former bordure supérieure dudit filet.
La Publication DE 299 21 584 U1 divulgue un système de rangement d'après le préambule de la revendication 1. Les organes d'ancrage sont notamment sous forme de doigts issus de matière du cadre, ledit cadre étant issu de moulage d'un matériau thermoplastique, et passant dans des trous prévus dans la paroi, l'extrémité libre desdits doigts étant écrasée à chaud pour former des «rivets plastiques».

Dans les réalisations connues, il n'est pas toujours possible de disposer de tels organes d'ancrage sur les parties extrêmes du cadre, ceci en raison du faible espace généralement disponible dans cette zone où se situe également l'accrochage du lien en éventuellement d'un fil métallique décrit plus loin.

De ce fait, les parties extrêmes du cadre ne sont pas ancrées et l'introduction d'un objet dans le filet peut provoquer leur écartement de la paroi.

Qui plus est, dans le cas où l'objet est de taille trop importante pour être contenu en entier dans le filet, et donc en dépasse par-dessus le lien, cet écartement peut subsister tant que ledit objet est en place dans ledit filet.

Il en résulte une nuisance esthétique et également une mauvaise qualité perçue par l'utilisateur.

L'invention a pour but de pallier ces inconvénients.

A cet effet, l'invention propose un système de rangement d'objets pour véhicule automobile, ledit système comprenant une paroi de fixation et un dispositif de rangement, ledit dispositif comprenant :
- un cadre ouvert en forme générale de U, ledit cadre étant associé contre une face d'endroit de ladite paroi par une pluralité d'organes d'ancrage, de manière à plaquer ledit cadre contre ladite paroi,
- un filet monté en tension sur ledit cadre, le bord supérieur dudit filet étant pourvu d'un lien tendu entre les parties extrêmes dudit cadre, de manière à former bordure supérieure dudit filet,
lesdites parties extrêmes étant pourvues de crochets d'ancrage, chacun desdits crochets comprenant :
- une première partie s'étendant au travers d'un orifice respectif prévu dans ladite paroi,
- une deuxième partie pointant vers le haut et s'appuyant contre une face d'envers de ladite paroi de manière à plaquer lesdites parties extrêmes contre ladite face d'endroit.

Dans cette description, les termes de positionnement dans l'espace (haut, bas, supérieur, avant, vertical, horizontal, ...) sont pris en référence au système disposé dans le véhicule.

Du fait de leur forme, les crochets s'avèrent plus facilement logeables dans un espace restreint que les organes d'ancrage usuellement employés.

Le montage du dispositif sur la paroi se fait par introduction des crochets dans les orifices correspondants, le dispositif étant incliné par rapport à sa position nominale une fois monté de manière à permettre l'introduction de la deuxième partie desdits crochets dans lesdits orifices, puis par rabattement dudit dispositif en position nominale pour réaliser l'association par les organes d'ancrage.

Les parties extrêmes du cadre sont alors fermement maintenues contre la paroi par les crochets, la deuxième partie desdits crochets s'appuyant contre la face d'envers de ladite paroi, ce qui permet de résoudre les problèmes de non esthétique et de mauvaise qualité perçue.

D'autres particularités et avantages de l'invention apparaîtront dans la description qui suit, faite en référence aux figures jointes, dans lesquelles :
- la figure 1 est une vue générale en perspective éclatée d'un système selon un mode de réalisation,
- la figure 2 est une vue partielle schématique en coupe, du système de la figure 1,
- la figure 3 est une vue partielle en perspective, en partie extrême de cadre, d'un dispositif de rangement selon une réalisation,
- la figure 4 est une vue partielle en perspective, en partie extrême de cadre, d'un dispositif de rangement selon une réalisation,
- la figure 5 est une vue partielle en perspective, en partie extrême de cadre, d'un dispositif de rangement selon une réalisation.

En référence aux figures, on décrit un système 1 de rangement d'objets pour véhicule automobile, ledit système comprenant une paroi 2 de fixation et un dispositif 3 de rangement, ledit dispositif comprenant :
- un cadre 4 ouvert en forme générale de U, ledit cadre étant associé contre une face d'endroit 5 de ladite paroi par une pluralité d'organes 6 d'ancrage, de manière à plaquer ledit cadre contre ladite paroi,
- un filet 7 - notamment élastique - monté en tension sur ledit cadre, le bord supérieur dudit filet étant pourvu d'un lien 8 - notamment élastique - tendu entre les parties extrêmes 9 dudit cadre, de manière à former bordure supérieure dudit filet,
lesdites parties extrêmes étant pourvues de crochets 10 d'ancrage, chacun desdits crochets comprenant :
- une première partie 11 s'étendant - ici horizontalement - au travers d'un orifice 12 respectif prévu dans ladite paroi,
- une deuxième partie 13 pointant vers le haut et s'appuyant contre une face d'envers 14 de ladite paroi de manière à plaquer lesdites parties extrêmes contre ladite face d'endroit.

Les organes 6 d'ancrage sont ici sous forme de doigts issus de matière du cadre 4, ledit cadre étant issu de moulage d'un matériau thermoplastique, et passant dans des trous 15 prévus dans la paroi 2, l'extrémité libre desdits doigts étant, de façon non représentée, écrasée à chaud pour former des «rivets plastiques».

La paroi 2 est par exemple une zone médiane sensiblement verticale, située au niveau de la console séparant les passagers avant, d'un tapis de recouvrement de sol du véhicule.

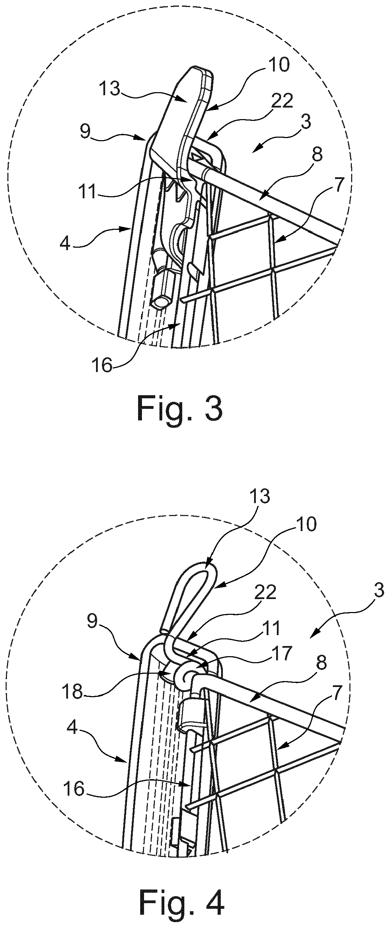

Selon la réalisation représentée en figure 3, le cadre 4 est à base de matériau plastique moulé, les crochets 10 étant issus de moulage dudit cadre.

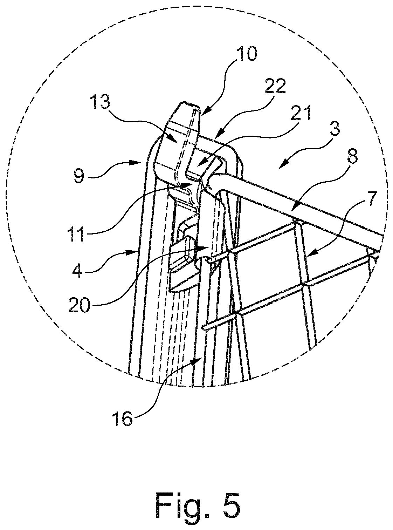

Selon la réalisation représentée en figures 4 et 5, un fil 16 métallique d'ancrage de la périphérie du filet 7 - à l'exception de son bord supérieur - est monté en envers du cadre 4.

De façon non représentée, l'ancrage de la périphérie du filet 7 est notamment réalisé par entrelacement du fil 16 au travers des mailles extérieures dudit filet.

Selon la réalisation représentée en figure 4, le fil 16 est conformé en forme de boucle 17 en regard des parties extrêmes 9 du cadre 4, lesdites boucles recevant en fixation les extrémités du lien 8 - ici par blocage avec des collerettes 18 montées sur ledit lien -, ledit fil présentant des extrémités conformées en crochets 10.

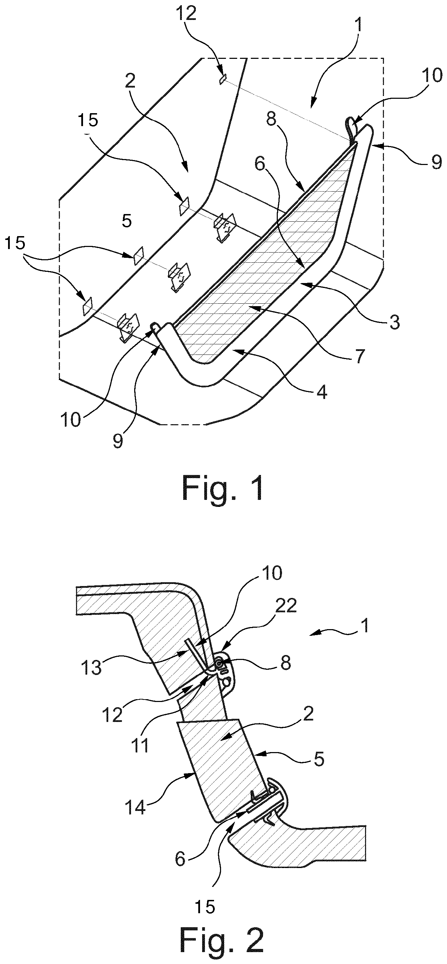

Selon la réalisation représentée en figure 5, le crochet 10 est sous forme d'une pièce rapportée sur le cadre 4 - notamment par collage ou soudure -, ladite pièce comprenant un logement 20 de réception d'une extrémité du fil 16 et un moyen d'accrochage 21 - ici sous forme de pince - d'une extrémité du lien 8. Comme représenté en figure 2, il peut être prévu que le cadre 4 s'étende devant les orifices 12 de manière à les masquer.

Pour ce faire, on dispose la première partie 11 des crochets 10 légèrement en retrait vers le bas des extrémités 22 du cadre 4.

## Revendications

1. Système (1) de rangement d'objets pour véhicule automobile, ledit système comprenant une paroi (2) de fixation et un dispositif (3) de rangement, ledit dispositif comprenant :
• un cadre (4) ouvert en forme générale de U, ledit cadre étant associé contre une face d'endroit (5) de ladite paroi par une pluralité d'organes (6) d'ancrage, de manière à plaquer ledit cadre contre ladite paroi,
• un filet (7) monté en tension sur ledit cadre, le bord supérieur dudit filet étant pourvu d'un lien (8) tendu entre les parties extrêmes (9) dudit cadre, de manière à former bordure supérieure dudit filet,
ledit système étant **caractérisé en ce que** lesdites parties extrêmes sont pourvues de crochets (10) d'ancrage, chacun desdits crochets comprenant :
• une première partie (11) s'étendant au travers d'un orifice (12) respectif prévu dans ladite paroi,
• une deuxième partie (13) pointant vers le haut et s'appuyant contre une face d'envers (14) de ladite paroi de manière à plaquer lesdites parties extrêmes contre ladite face d'endroit.

2. Système selon la revendication 1, **caractérisé en ce que** le cadre (4) est à base de matériau plastique moulé, les crochets (10) étant issus de moulage dudit cadre.

3. Système selon la revendication 1, **caractérisé en ce qu'**un fil (16) métallique d'ancrage de la périphérie du filet (7) est monté en envers du cadre (4).

4. Système selon la revendication 3, **caractérisé en ce que** le fil (16) est conformé en forme de boucle (17) en regard des parties extrêmes (9) du cadre (4), lesdites boucles recevant en fixation les extrémités du lien (8), ledit fil présentant des extrémités conformées en crochets (10).

5. Système selon la revendication 3, **caractérisé en ce que** le crochet (10) est sous forme d'une pièce rapportée sur le cadre (4), ladite pièce comprenant un logement (20) de réception d'une extrémité du fil (16) et un moyen d'accrochage (21) d'une extrémité du lien (8).

6. Système selon l'une quelconque des revendications 1 à 5, caractérisé en ce le cadre (4) s'étend devant les orifices (12) de manière à les masquer.

## Patentansprüche

1. System (1) zum Verstauen von Gegenständen für ein Kraftfahrzeug, wobei das besagte System eine Wand (2) zur Befestigung und eine Vorrichtung (3) zum Verstauen umfasst, wobei die besagte Vorrichtung umfasst:
- einen offenen Rahmen (4) in einer allgemeinen Form eines U, wobei der besagte Rahmen durch eine Vielzahl von Organen (6) zur Verankerung an eine Vorderseite (5) der besagten Wand angelegt ist, um den besagten Rahmen an der besagten Wand anzudrücken,
- ein Netz (7), das gespannt auf dem besagten Rahmen montiert ist, wobei der obere Rand des besagten Netzes mit einem Band (8) versehen ist, das zwischen den Endabschnitten (9) des besagten Rahmens gespannt ist, um eine obere Umrandung des besagten Netzes zu bilden,
wobei das besagte System **dadurch gekennzeichnet ist, dass** die besagten Endabschnitte mit Haken (10) zur Verankerung versehen sind, wobei jeder der besagten Haken umfasst:
- einen ersten Abschnitt (11), der sich durch eine jeweilige Öffnung (12) hindurch erstreckt, die in der besagten Wand vorgesehen ist,
- einen zweiten Abschnitt (13), der nach oben weist und sich an eine Rückseite (14) der besagten Wand anlegt, um die besagten Endabschnitte an der besagten Vorderseite anzudrücken.

2. System nach Anspruch 1, **dadurch gekennzeichnet, dass** der Rahmen (4) auf Basis eines geformten Kunststoffmaterials ist, wobei die Haken (10) aus der Formung des besagten Rahmens stammen.

3. System nach Anspruch 1, **dadurch gekennzeichnet, dass** ein Metalldraht (16) zur Verankerung des Umfangs des Netzes (7) an der Rückseite des Rahmens (4) montiert ist.

4. System nach Anspruch 3, **dadurch gekennzeichnet, dass** der Draht (16) in Form einer Schleife (17) gegenüber den Endabschnitten (9) des Rahmens (4) ausgeformt ist, wobei die besagten Schleifen die Enden des Bandes (8) zur Befestigung aufnehmen, wobei der besagte Draht Enden aufweist, die als Haken (10) ausgeformt sind.

5. System nach Anspruch 3, **dadurch gekennzeichnet, dass** der Haken (10) in Form eines beigebrachten Teils am Rahmen (4) ist, wobei das besagte Teil einen Sitz (20) zur Aufnahme eines Endes des Drahts (16) und ein Mittel zum Anhängen (21) eines Endes des Bandes (8) umfasst.

6. System nach einem der Ansprüche 1 bis 5, **dadurch gekennzeichnet, dass** sich der Rahmen (4) vor den Öffnungen (12) erstreckt, um diese zu verschleiern.

## Claims

1. Object storage system (1) for a motor vehicle, said system comprising a fixing wall (2) and a storage device (3), said device comprising:
- a frame (4) opened in a general U shape, said frame being connected against a front face (5) of said wall by multiple anchoring bodies (6), in a way to flatten said frame against said wall,
- a net (7) tensioned on said frame, the upper edge of said net being equipped with a connector (8), tight between the end sections (9) of said frame, in a way to form an upper edge of said net,
said system being **characterised in that** said end sections are equipped with anchoring brackets (10), each one of said brackets comprising:
- a first section (11) extending through a respective orifice (12) provided in said wall,
- a second section (13) pointing towards the top and pressing against a bottom face (14) of said wall, in a way to flatten said end sections against said front face.

2. System according to claim 1, **characterised in that** the frame (4) is a moulded plastic material base, the brackets (10) coming from the mould of said frame.

3. System according to claim 1, **characterised in that** a metal anchoring wire (16) of the periphery of the net (7) is assembled on the underside of the frame (4).

4. System according to claim 3, **characterised in that** the wire (16) conforms to the shape of a loop (17) facing the end sections (9) of the frame (4), said loops holding fixed the ends of the connector (8), said wire presenting ends conforming to brackets (10).

5. System according to claim 3, **characterised in that** the bracket (10) is in the form of a component supported on the frame (4), said component comprising a slot (20) for holding an end of the wire (16) and a means for fastening (21) an end of the connector (8).

6. System according to any one of the claims 1 to 5, **characterised in that** the frame (4) extends in front of the orifices (12) in a way to conceal them.
